# EUROPÄISCHE PATENTSCHRIFT

(11) **EP 3 096 894 B1**
(45) Veröffentlichungstag und Bekanntmachung des Hinweises auf die Patenterteilung: **15.04.2020**
(21) Anmeldenummer: 15705895.9
(22) Anmeldetag: 14.01.2015
(51) Int. Cl.: B07B 7/01, B07B 7/02, B07B 7/086

(54) **VORRICHTUNG ZUM ABSCHEIDEN EINES KÖRNIGEN GUTS AUS EINEM FÖRDERLUFTSTROM**
APPARATUS FOR SEPARATING A GRANULAR MATERIAL FROM A CONVEYING AIR STREAM
DISPOSITIF DE SÉPARATION D'UN PRODUIT GRANULAIRE D'AVEC UN FLUX D'AIR DE TRANSPORT

(30) Priorität: 22.01.2014 AT 500392014
(43) Veröffentlichungstag der Anmeldung: 30.11.2016
(73) Patentinhaber: Wintersteiger AG, 4910 Ried im Innkreis (AT)
(72) Erfinder: REITER, Franz, A-4924 Waldzell (AT)
(74) Vertreter: Hübscher & Partner Patentanwälte GmbH
(86) Internationale Anmeldenummer: PCT/AT2015/050012
(87) Internationale Veröffentlichungsnummer: WO 2015/109350

(56) Entgegenhaltungen:
- CH-A- 504 245
- DE-A1- 3 404 093
- GB-A- 2 024 038
- US-A- 650 800
- US-A- 2 221 385

## Beschreibung

### Technisches Gebiet

Die Erfindung bezieht sich auf eine Vorrichtung zum Abscheiden eines körnigen Guts aus einem Förderluftstrom mit einer im Wesentlichen tangential anströmbaren Umlenkfläche für den beladenen Förderluftstrom.

Eine derartige Vorrichtung geht beispielsweise aus der DE 34 04 093 A1 hervor.

### Stand der Technik

Um körniges Gut aus einem Förderluftstrom abscheiden zu können, ist es üblich, einen Zyklonabscheider einzusetzen, in den der mit dem körnigen Gut beladene Förderluftstrom tangential eingeleitet wird, sodass der eingeblasene Förderluftstrom im Einlaufzylinder mit der Wirkung in eine Umlaufbahn umgelenkt wird, dass die Gutkörner Fliehkräften unterworfen werden, die sich im Bereich des an den Einlaufzylinder anschließenden Kegelmantels vergrößern, und aufgrund dieser Fliehkraftbelastung aus dem Förderluftstrom abgeschieden und entlang des Kegelmantels nach unten ausgetragen werden, während der vom körnigen Gut befreite Förderluftstrom über ein Tauchrohr nach oben aus dem Zyklonabscheider abgezogen wird. Da der Abscheidegrad vom Längen-Durchmesserverhältnis des Zyklonabscheiders abhängt, können solche Zyklonabscheider bei Anlagen mit einem beschränkten Platzangebot hinsichtlich der Bauhöhe nur bedingt eingesetzt werden, wie dies beispielsweise bei Parzellenmähdreschern der Fall ist. Die dann erforderlichen Ableitbleche für die Gutkörner führen nämlich zu einem vermehrten Kornbruch und bedingen einen vergrößerten Luftaustrag mit dem Korngut.

### Darstellung der Erfindung

Der Erfindung liegt somit die Aufgabe zugrunde, eine Vorrichtung zum Abscheiden eines körnigen Guts aus einem Förderluftstrom so auszugestalten, dass trotz einer geringen Bauhöhe mit einfachen konstruktiven Mitteln eine sichere Abscheidung der Gutkörner aus dem Förderluftstrom gewährleistet werden kann.

Ausgehend von einer Vorrichtung der eingangs geschilderten Art löst die Erfindung die gestellte Aufgabe dadurch, dass die Umlenkfläche in Strömungsrichtung nach unten gekrümmt ist und dass die Umlenkfläche in Strömungsrichtung in eine gegensinnig gekrümmte Leitfläche für eine weitgehend laminare Strömungsableitung anschließt.

Die Erfindung beruht auf dem Umstand, dass aufgrund der Massenträgheit die mit dem Förderluftstrom entlang der Umlenkfläche umgelenkten Gutkörner einer unmittelbar anschließenden gegensinnigen Umlenkung der Luftströmung nicht mehr folgen und daher aus der Förderluftströmung abgeschieden werden. Voraussetzung ist eine entsprechende laminare Richtungsänderung des Förderluftstroms, wobei der Impuls der Gutkörner im Abströmbereich der Umlenkfläche ausreichend groß sein muss, um nicht aufgrund der durch die gegensinnig umgelenkte Luftströmung bedingten Ablenkkräfte dieser Luftströmung zu folgen. Da somit lediglich für eine gegensinnige, doppelte Umlenkung des Förderluftstroms zu sorgen ist, bleibt der Platzbedarf für die Anordnung der Umlenkfläche mit der daran anschließenden, gegensinnig gekrümmten Leitfläche in Richtung der Kornabscheidung gering. Die Kornführung im Anschluss an die Kornumlenkung entlang der Umlenkfläche hat auf den Abscheidevorgang keinen Einfluss mehr und kann folglich den jeweiligen Anforderungen entsprechend gestaltet werden, was vorteilhafte Konstruktionsvoraussetzungen für besondere Anforderungen schafft, wie sie beispielsweise bei der Kornabscheidung für Parzellenmähdrescher zu erfüllen sind.

Obwohl die Voraussetzungen für eine umlenkbedingte Abscheidung des körnigen Guts aus dem Förderluftstrom in einer nicht erfindungsgemäßen Ausführung beispielsweise auch bei einer horizontalen Strömungsumlenkung erfüllt werden, ergeben sich besonders günstige Abscheideverhältnisse, wenn die Umlenkfläche erfindungsgemäß in Strömungsrichtung nach unten gekrümmt ist, weil in diesem Fall die Schwerkraft die Abscheidung der Gutkörner aus dem Förderluftstrom unterstützt. Außerdem können bei einer solchen Ausrichtung der Umlenkfläche vorteilhafte Konstruktionsbedingungen für einen Abscheider sichergestellt werden, wenn die Umlenkfläche und die Leitfläche eine Decke eines Abscheidergehäuses bilden, das im Anschluss an die Leitfläche eine Luftaustrittsöffnung aufweist, sodass die aus dem Förderluftstrom ausgeschiedenen Gutkörner in das Abscheidergehäuse fallen, während der entladene Förderluftstrom im Anschluss an die Leitfläche durch die Luftaustrittsöffnung aus dem Abscheidergehäuse strömt.

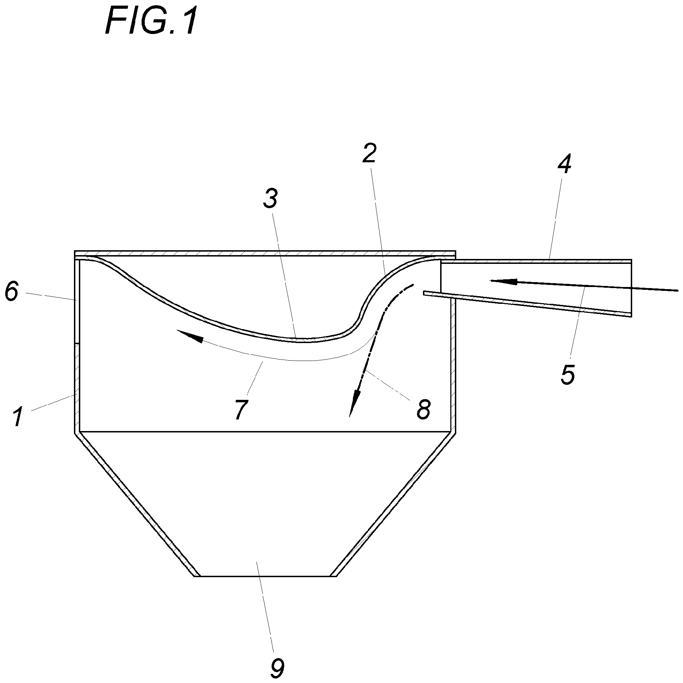

### Kurze Beschreibung der Zeichnung

In der Zeichnung ist der Erfindungsgegenstand beispielsweise dargestellt, und zwar wird eine erfindungsgemäße Vorrichtung zum Abscheiden eines körnigen Guts aus einem Förderluftstrom in einem schematischen Längsschnitt gezeigt.

Die Vorrichtung gemäß dem dargestellten Ausführungsbeispiel weist ein Abscheidergehäuse 1 auf, das eine Decke aus einer nach unten gekrümmten Umlenkfläche 2 und einer daran anschließenden, gegensinnig gekrümmten Leitfläche 3 bildet. Die Umlenkfläche 2 wird über einen düsenartigen Einlass 4 tangential von einem mit einem körnigen Gut beladenen Förderluftstrom 5 beaufschlagt, der nach dem Abscheiden des körnigen Guts über eine Luftaustrittsöffnung 6 auf der dem Einlass 4 gegenüberliegenden Seite aus dem Abscheidergehäuse 1 ausströmt.

Die Saatgutkörner werden entlang der Umlenkfläche 2 durch den Förderluftstrom 5 in Umlenkrichtung beschleunigt und erhalten einen Impuls, der ausreicht, um aus dem Förderluftstrom 5 ausgeschieden zu werden, wenn dieser Förderluftstrom 5 gegensinnig zur Umlenkfläche 2 laminar umgelenkt wird. Der entlang der gegensinnig gekrümmten Leitfläche 3 umgelenkte, entladene Förderluftstrom ist mit 7 bezeichnet. Das abgeschiedene körnige Gut fällt entsprechend dem strichpunktiert angedeuteten Pfeil 8 in das Abscheidergehäuse 1 und wird aus dem Abscheidergehäuse 1 über eine Bodenöffnung 9 ausgetragen.

Da die Kornführung im unmittelbaren Anschluss an die gegensinnige Umlenkung des entladenen Förderluftstroms 7 entlang der Leitfläche 3 keinen Einfluss auf die Abscheidewirkung ausüben kann, spielt auch die Form des Abscheidergehäuses 1 in diesem Bereich keine Rolle und kann an die jeweiligen Anforderungen angepasst werden, wobei sich für das Abscheidergehäuse 1 vergleichsweise geringe Bauhöhen verwirklichen lassen. Die maßgebende Bauhöhe wird ja im Wesentlichen durch die Umlenkfläche 2 und die anschließende Leitfläche 3 bestimmt.

## Patentansprüche

1. Vorrichtung zur Kornabscheidung für einen Parzellenmähdrescher mit einer im Wesentlichen tangential anströmbaren Umlenkfläche (2) für einen mit dem körnigen Gut beladenen Förderluftstrom (5), **dadurch gekennzeichnet, dass** die Umlenkfläche (2) in Strömungsrichtung nach unten gekrümmt ist und dass an die Umlenkfläche (2) in Strömungsrichtung eine gegensinnig gekrümmte Leitfläche (3) für eine weitgehend laminare Strömungsableitung anschließt.

2. Vorrichtung nach Anspruch 1, **dadurch gekennzeichnet, dass** die Umlenkfläche (2) und die Leitfläche (3) eine Decke eines Abscheidergehäuses (1) bilden, das im Anschluss an die Leitfläche (3) eine Luftaustrittsöffnung (6) aufweist.

## Claims

1. Apparatus for separation of grain for a plot combine harvester, comprising a deflecting surface (2) for a conveying air stream (5) laden with the granular material, the flow of the conveying air stream taking place substantially tangentially against the deflecting surface, **characterised in that** the deflecting surface (2) is curved downwards in the flow direction and **in that** a guiding surface (3), which is curved in the opposite direction, for a substantially laminar flow diversion adjoins the deflecting surface (2) in the flow direction.

2. Apparatus as claimed in claim 1, **characterised in that** the deflecting surface (2) and the guiding surface (3) form a cover of a separator housing (1) which has an air outlet opening (6) following the guiding surface (3).

## Revendications

1. Dispositif de séparation du grain pour une moissonneuse-batteuse pour parcelles doté d'une surface déflectrice (2) pouvant être alimentée de manière sensiblement tangentielle pour un flux d'air d'alimentation chargé avec le grain, **caractérisé en ce que** la surface déflectrice (2) est incurvée vers le bas dans le sens de l'écoulement et **en ce que** la surface déflectrice (2) est raccordée dans le sens de l'écoulement à une surface de guidage (3) incurvée en sens inverse pour créer une dérivation d'écoulement largement laminaire.

2. Dispositif selon la revendication 1, **caractérisé en ce que** la surface déflectrice (2) et la surface de guidage (3) forment une enveloppe de séparateur (1) qui présente une ouverture d'évacuation d'air (6) derrière la surface de guidage (3).
